# EUROPEAN PATENT APPLICATION

(11) **EP 4 420 929 A1**
(43) Date of publication of application: **28.08.2024**
(21) Application number: 23213097.1
(22) Date of filing: 29.11.2023
(51) Int. Cl.: B60P 7/08

(54) **IMPROVED CHAIN LOAD BINDER**

(30) Priority: 27.02.2023 AU 2023900501
(71) Applicant: Wang, Shang, Hornsby, NSW 2077 (AU)
(72) Inventor: Wang, Shang, Hornsby, NSW 2077 (AU)
(74) Representative: IK-IP LTD

(57) **Abstract**

A chain load binder is disclosed including: a first connection means for attaching to a first attachment hook; a second connection means for attaching to a second attachment hook; an actuating lever; a ratchet mechanism; one of the connection means includes a chain, and the ratchet mechanism includes a chain sprocket which engages with the chain; the ratchet mechanism is connected to the actuating lever and interconnects the first and second connection means, the ratchet mechanism having an operational condition in which rotation of the chain sprocket in a first direction urges the first and second connection means towards each other, and having a released condition in which the chain sprocket is free to rotate in an opposite direction to allow the first and second connection means to move away from each other; the load binder further includes a chain guide with a generally semi-circular region which maintains the chain in engagement with the chain sprocket; and wherein the chain guide is resiliently mounted in the load binder.

## Description

### Technical Field

The invention relates to an improved chain load binder for securely tightening chains that are, in turn, used for securing a load, typically on a vehicle such as a truck.

### Background to the Invention

It is important when transporting goods for example on trucks that the goods be properly secured to prevent them from moving around. This is important both with regard to avoiding damage to the goods and to minimise safety hazards that would be posed by the goods moving around, or becoming separated from the truck during transit.

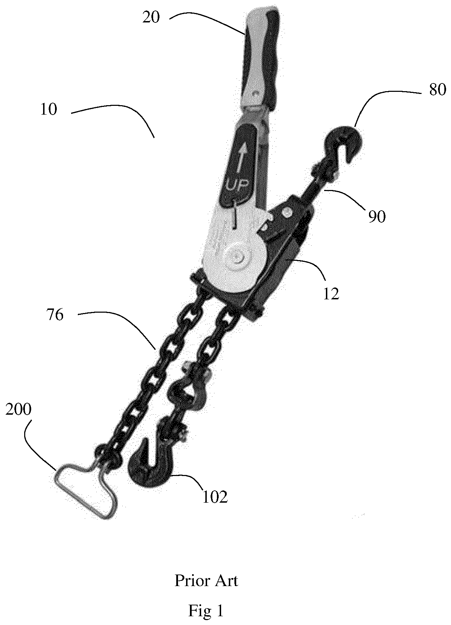

Referring to figure 1, an example of a typical prior art chain load binder 10 is shown. The load binder includes a first attachment hook 80 which is attached to the main body 12 of the load binder by swivel bar 90. A second attachment hook is attached to one end of a length of chain 76. The chain 76 passes around a chain sprocket (not visible) which is rotatably mounted in main body 12 and is rotated by ratchet operating lever 20. A chain keeper 200 is attached to the other end of chain 76. The function of the chain keeper 200 is to prevent the length of chain 76 from being completely pulled out of the main body 12.

Referring to figure 2, a diagram is shown which is taken from applicant's previous international patent application no PCT/AU2006/000827 published as WO2007/041752, the entire contents of which are incorporated herein by reference.

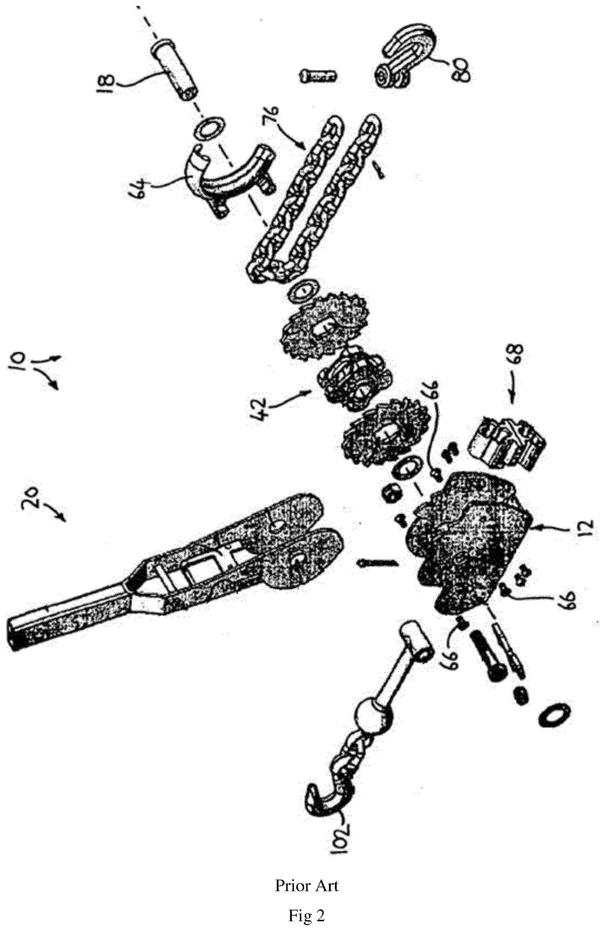

Figure 2 shows the internal components of the chain binder. The chain sprocket 42 is rotatably mounted on shaft 18 along with the operating handle 20. An inlet/outlet unit 68 guides the chain as it travels into the body 12 in either direction to prevent it from twisting. Particular attention is drawn to the semi-circular chain guide 64 which is mounted to the main body 12 by way of chain guide bolts 66. The chain guide 64 maintains the chain firmly in engagement with the chain sprocket 42. Explanations of the operation of the load binder and the functions of the components identified by the remaining reference numerals in figure 2 can be found in applicant's international patent publication WO2007/041752 and are not explained in detail here.

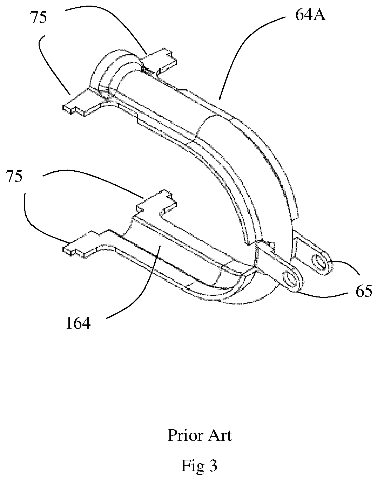

Referring to figure 3, an example of a prior art chain guide is 64A shown in greater detail. The chain guide has an internal channel 164 provided around the inside of the chain guide. The links of the chain are aligned to the channel by the inlet/outlet unit as the chain passes into the main body. The mounting bolts pass through apertures in tabs 65 to mount the chain guide to the main body. The ends of the chain guide are loosely seated in the rear of the inlet/outlet unit by way of mounting tabs 75 which are loosely located in slots in the inlet/outlet unit. A small degree of movement of the free ends is thereby enabled, which assists in the smooth travel of the chain through the main body.

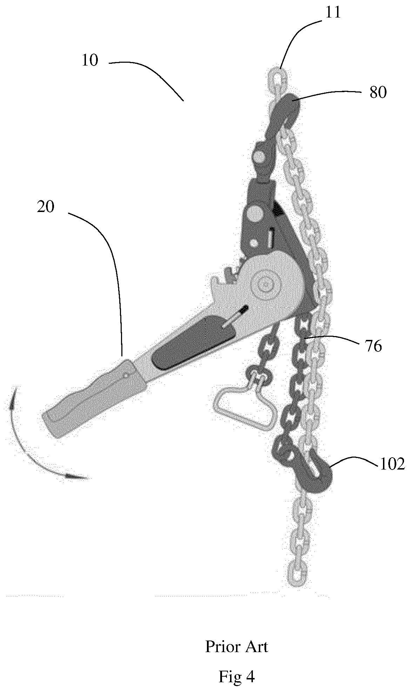

Referring to the sequence of figure 4 to 6, at figure 4, the operation of the chain binder will be explained with reference to securing a load (not shown) which is secured to a truck (not shown) by way of a chain 11. Only a portion of the chain 11 is shown for ease of illustration.

At figure 4, a chain has been fastened around a load. The chain binder is then attached to a portion of the chain 11 by way of the attachment hooks 80, 102. The operating lever is then pushed back and forth as indicated by the arrows. This causes the ratchet arrangement inside the binder to progressively rotate the chain sprocket in a first direction, which draws the chain 76 through the main body to draw the second attachment hook towards the main body. This movement pulls the attachment hooks towards one another, creating tension in the chain 11 to secure the load.

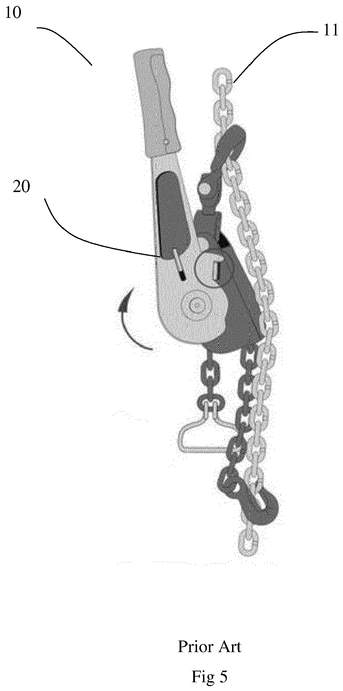

At figure 5, when an appropriate level of tension has been applied to chain 11, the operating lever is put into its upright locked position. The ratchet mechanism prevents rotation of the chain sprocket and the load is now secure for transport to another location.

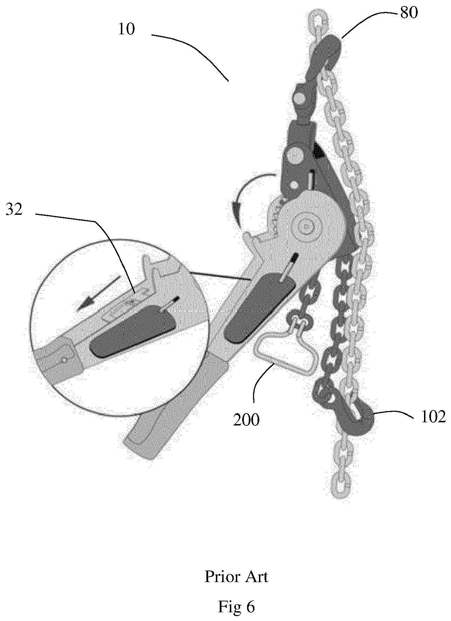

At figure 6, to release the tension in the chain, the pushing plate 32 inside handle is moved against a biasing spring. This allows the operating lever to be moved out of its locked position. The operating lever is then rotated fully downwards which causes the ratchet mechanism to release the chain sprocket, allowing it to rotate freely in the opposite direction. The tension in chain 11 pulls the attachment hooks away from one another and the chain 72 moves through the main body to allow the attachment hook 102 to move away from body 12. The chain binder 10 can now be removed from chain 11 and the chain 11 can be removed from the load.

The amount of energy stored in the tensioned chain can be quite significant. Chainsused in these arrangements are typically rated to a safe working load of 500kg. In use, it is not uncommon for these types of devices to be tensioned by operators up toi around 1000kg. This stored energy is suddenly released when the ratchet is released.

In some instances, when the ratchet mechanism is released, the chain 76 can rapidly feed out of the main body to the extent that the chain keeper 200 abuts the main body. In these instances, the chain keeper can collide with the inlet/outlet unit of the chain binder with a significant force due to the energy previously stored in the tensioned chain. It has been determined that these collisions can give rise to deformation of the chain guide which then results in less smooth travel of the chain 76 through the body, or poor engagement between the chain sprocket and the chain.

There remains a need for improvements in chain load binders.

### Summary of the Invention

In a first aspect the present invention provides chain load binder including: a first connection means for attaching to a first attachment hook; a second connection means for attaching to a second attachment hook; an actuating lever; a ratchet mechanism; one of the connection means includes a chain, and the ratchet mechanism includes a chain sprocket which engages with the chain; the ratchet mechanism is connected to the actuating lever and interconnects the first and second connection means, the ratchet mechanism having an operational condition in which rotation of the chain sprocket in a first direction urges the first and second connection means towards each other, and having a released condition in which the chain sprocket is free to rotate in an opposite direction to allow the first and second connection means to move away from each other; the load binder further includes a chain guide with a generally semi-circular region which maintains the chain in engagement with the chain sprocket; and wherein the chain guide is resiliently mounted in the load binder.

The chain guide may be resiliently mounted by way of a region of resilient material.

The region of resilient material may be held in the body of the load binder by a fastener which passes through the body and the region of resilient material.

The region of resilient material may be located at about the apex of the semi-circular region of the chain guide.

### Brief Description of the Drawings

An embodiment of the present invention will now be described, by way of example only, with reference to the accompanying drawings, in which:
Figure 1 is a perspective view of a prior art chain load binder;
Figure 2 is an exploded view of a prior art chain load binder taken from applicant's international patent publication WO2007/041752;
Figure 3 is a perspective view of a prior art chain guide used in the type of chain load binder shown in figure 1;
Figures 4 to 6 illustrate a sequence of operation of the chain load binder of figure 1;
Figure 7 is a side view of an improved chain load binder;
Figure 8 is a cut-away view of the chain load binder of figure 7;
Figure 9 is a left side view of the chain load binder of figure 7;
Figure 10 is a perspective view of the chain guide and mounting arrangement of the chain load binder of figure 7;
Figure 11 is a front view of the chain guide of figure 10; and
Figure 12 is a die view of the chain guide of figure 10.

### Detailed Description of the Preferred Embodiment

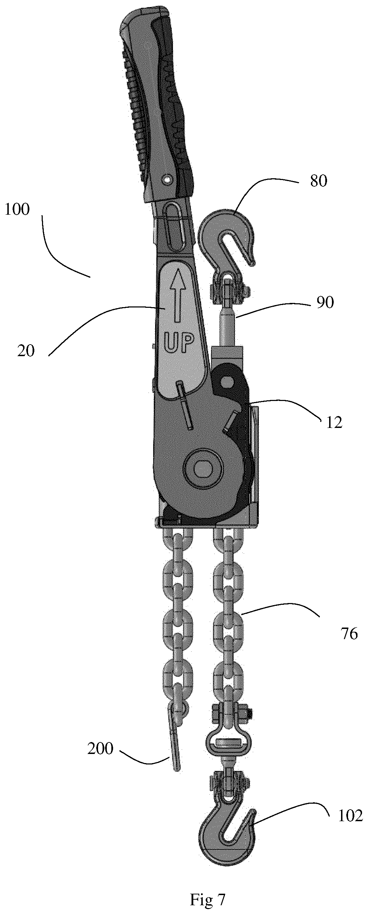

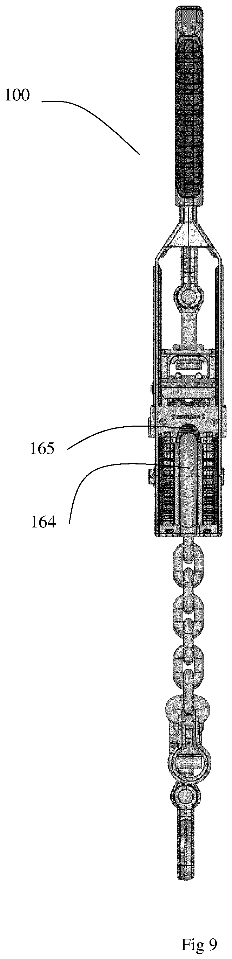

Referring to figure 7 to 9, an improved load binder 100 is shown. Where like components are used, like reference numerals will be used corresponding to those used in relation to figures 1 to 6. Chain load binder 100 differs from chain load binder 10 only in the mounting arrangement and form of the chain guide. The ratchet mechanism operates in the same way and so will not be described in detail here. Full details of the operation of the ratchet mechnaism can be found in applicant's international patent publication WO2007/041752

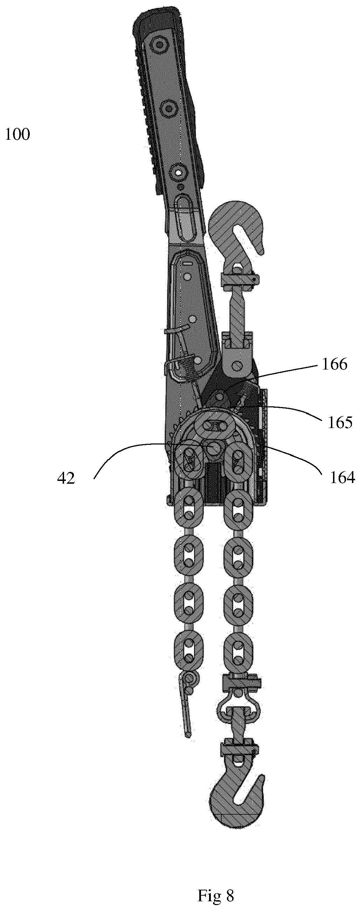

Chain load binder 100 includes a first connection means in the form of swivel bar 90 for attaching to a first attachment hook 80 and a second connection means in the form of chain 76 for attaching to a second attachment hook 102. Actuating lever 20 operates a ratchet mechanism housed in the main body 12 of the load binder. Ratchet mechanism includes a chain sprocket 42 (see figure 8) which engages with the chain 76. The ratchet mechanism is connected to the actuating lever 20 and interconnects the first and second connection means.

The ratchet mechanism has an operational condition (identicial to that illustrated in figure 4) in which rotation of the chain sprocket 42 in a first direction urges the first and second connection means towards each other.

The ratchet mechanism also has a released condition (identical to that illustrated in figure 6) in which the chain sprocket is free to rotate in an opposite direction to allow the first and second connection means to move away from each other. The load binder 100 further includes a chain guide 164 which maintains the chain 76 in engagement with the chain sprocket 42. The chain guide is resiliently mounted in the load binder by way of a region of elastomeric resilient material in the form of a rubber stop 165.

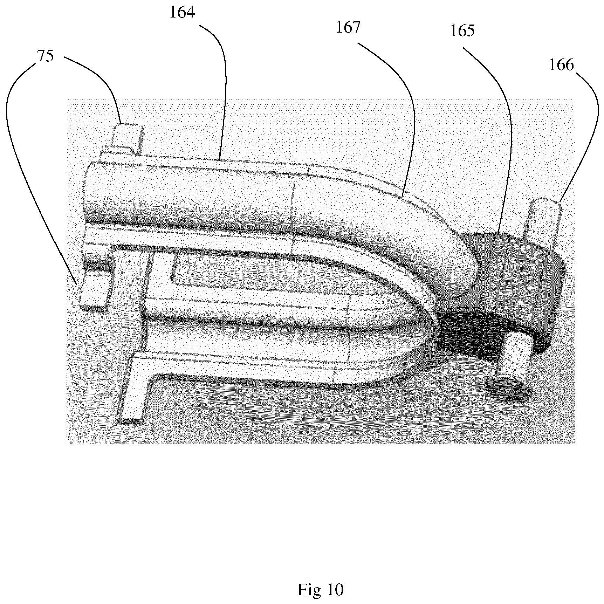

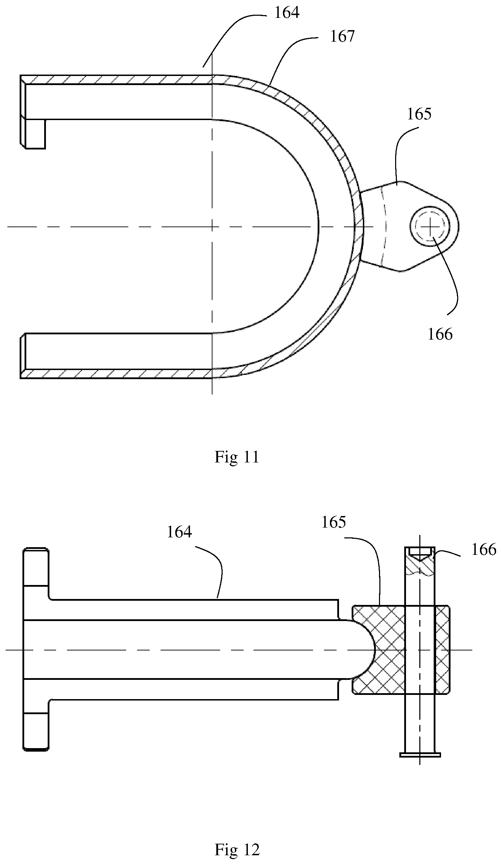

Referring now to figures 10 to 12, chain guide 164 has a generally semi-circular region 167. Rubber stop is held in the body of the chain load binder by way of a bolt fastener 166 which passes through each side the body 12 of the load binder, and passes through an aperture in the rubber stop 165.

When assembled in the load binder, the mounting tabs 75 sit in corresponding slots provided in the chain inlet/outlet unit. The stop 165 sits against the outside of the apex of the semi-circular portion of the chain guide 164. The stop 165 is dimensioned to loosely occupy the space between the chain guide and the bolt 166 so that the chain guide 164 is retained in position with a small amount of free play of the tabs 75. The chain guide 164 is therefore free to "float" to a small degree to assist in smooth travel of the chain 76 through the chain guide 164 in use.

If the chain guide 164 experiences a shock force, such as by the chain keeper 200 impinging on the chain entry point at high speed, as may happen if the load binder is released quickly from a state of high tension, then these shock forces are absorbed by the rubber stop 165 which allows the chain guide 164 to move to accommodate this force and return to its original position. The resilient mounting of the chain guide protects the chain guide from being deformed by high shock forces and therefore results in a more robust and reliably constructed chain load binder.

Although one example of a resilient mounting has been deescribed, it will be apparent to those skilled in the art that the resilient mounting could be achieved in other ways. The chain guide could be mounted on springs, or if using resilient material, the resilient material could be positioned in other locations in association with the chain guide.

Embodiments of the invention provide a reliable and robust way to provide chain load binders with extended useful service lives.

Any reference to prior art contained herein is not to be taken as an admission that the information is common general knowledge, unless otherwise indicated.

Finally, it is to be appreciated that various alterations or additions may be made to the parts previously described without departing from the spirit or ambit of the present invention.

## Claims

1. A chain load binder including:
a first connection means for attaching to a first attachment hook;
a second connection means for attaching to a second attachment hook;
an actuating lever;
a ratchet mechanism;
one of the connection means includes a chain, and the ratchet mechanism includes a chain sprocket which engages with the chain;
the ratchet mechanism is connected to the actuating lever and interconnects the first and second connection means, the ratchet mechanism having an operational condition in which rotation of the chain sprocket in a first direction urges the first and second connection means towards each other, and having a released condition in which the chain sprocket is free to rotate in an opposite direction to allow the first and second connection means to move away from each other;
the load binder further includes a chain guide with a generally semi-circular region which maintains the chain in engagement with the chain sprocket; and
wherein the chain guide is resiliently mounted in the load binder.

2. A chain load binder according to claim 1 wherein the chain guide is resiliently mounted by way of a region of resilient material.

3. A chain load binder according to claim 2 wherein the region of resilient material is held in the body of the load binder by a fastener which passes through the body and the region of resilient material.

4. A chain load binder according to either of claims 2 or 3 wherein the region of resilient material is located at about the apex of the semi-circular region of the chain guide.
